# EUROPEAN PATENT APPLICATION

(11) **EP 2 565 837 A1**
(43) Date of publication of application: **06.03.2013**
(21) Application number: 12176621.6
(22) Date of filing: 16.07.2012
(51) Int. Cl.: G06Q 30/02

(54) **Location-based promotion evaluation**

(30) Priority: 31.08.2011 US 201113222402
(71) Applicant: NCR Corporation, Duluth, GA 30096 (US)
(72) Inventor: Koser, Vincent, West Lafayette, IN Indiana 47906 (US)
(74) Representative: MacLeod, Roderick William

(57) **Abstract**

Techniques for location-based promotion evaluation are presented. A customer is identified (step 110) and a current physical location of the customer is detected (step 120) based on the customer's mobile device. Factors for promotion are obtained based on a predefined range surrounding the current physical location (step 130) and a promotion is generated for a specific enterprise within the predefined range using the factors (step 140) and then dynamically transmitted (step 150) to the mobile device of the customer for redemption.

## Description

Consumers are increasingly using automated mechanisms to perform everyday transactions. Kiosks exist to avoid employing enterprise personnel and queues. These automated kiosks allow consumers to perform transactions with an enterprise or agency with little to no human intervention. Individuals also perform transactions online and are capable of using their smart phones to check out of stores.

Recently, the industry has begun to offer or push promotions to consumers via the consumers' mobile phones. Many times this becomes annoying to the consumer, since an unsolicited text message is akin to receiving junk email to many consumers. Moreover, the promotions that are provided often are not something the consumer is interested in and not related to activities of the consumer. That is, even with automated promotional-based retail engines, consumers still receive offers that are not even remotely related to something the consumers are interested in.

In addition, many times the consumer is traveling or outside of his/her home when offers arrive. Some of these offers may be related to goods or services that are nowhere near the physical proximity of the consumer. As a result, the consumer simply deletes the offer or completely ignores it. Furthermore, there may be a charge for receiving a text message when located in a foreign country.

Still further, some promotions are pushed based on a particular store that the consumer is located in. Such a situation is in some cases useful but there may be a variety of other stores in proximity to the consumer that the consumer would be more interested in receiving a promotion from.

A few third-party services provide automated promotions on behalf of retailers to the mobile phones of consumers. For example, consider Groupon™, which is a deal-of-the-day service that sends daily offers for promotions to consumers. Groupon™ does not attempt in any significant fashion to tailor the deals offered based on attributes of the consumer. As a result, although there was a lot of hype when Groupon™ initially launched, many consumers rarely if ever take advantage of the promotions sent on a daily basis to them. Thus, even retailers have become less enthused with Groupon™ and for the most part the deals have now become promotions from small enterprises that are desperate for any kind of business. The bigger retailers rarely advertise promotions on Groupon™.

In various embodiments, techniques for location-based promotion evaluation are presented. According to an embodiment, a method for location-based promotion evaluation is discussed.

Specifically, a customer identifier is received for a customer and a current physical location for the customer is obtained. A range of redemption is then defined as a predefined physical range that surrounds an enterprise that is providing a promotional offer, and the range or redemption includes the current physical location. Factors are evaluated in combination with the range of redemption to supply the promotional offer for the customer. Finally, the promotional offer is transmitted to the customer for redemption by the customer at the enterprise associated with the range of redemption.

According to a first aspect of the present invention there is provided a processor-implemented method programmed in a non-transitory processor-readable medium and to execute on a device configured to execute the method, comprising: receiving a customer identifier for a customer; obtaining a current physical location for the customer; defining a range of redemption as a predefined physical range that surrounds an enterprise that is providing a promotional offer and the range or redemption includes the current physical location; evaluating factors in combination with the range of redemption to supply the promotional offer for the customer; and transmitting the promotional offer to the customer for redemption by the customer at the enterprise associated with the range of redemption.

The method optionally further comprises, receiving an indication that the customer has redeemed the promotional offer with the enterprise.

The method optionally further comprises, charging an account of the enterprise based on the redemption.

The method optionally further comprises, crediting a predefined amount of loyalty points to a loyalty account of the customer based on the redemption.

The method optionally further comprises, updating metrics associated with the redemption for subsequent reporting.

The step of receiving a customer identifier optionally includes obtaining the customer identifier from a location-based promotion evaluation agent that processes on a mobile device of the customer.

The step of obtaining a current physical location for the customer optionally includes acquiring the current physical location from the mobile device with the customer identifier.

The step of defining a range of redemption as a predefined physical range that surrounds an enterprise that is providing a promotional offer optionally includes defining the range of redemption as a graphical circle with the enterprise being at the center of the graphical circle and the current physical location of the customer being within or on the graphical circle.

The step of defining a range of redemption as a predefined physical range that surrounds an enterprise that is providing a promotional offer optionally includes identifying a list of available promotional offers by obtaining enterprise locations for available enterprises, each enterprise location and the current physical location of the customer are within the range of redemption.

The step of evaluating factors in combination with the range of redemption to supply the promotional offer for the customer optionally includes selecting the promotional offer from the list of available promotional offers based on a score applied to using the factors.

The step of evaluating factors in combination with the range of redemption to supply the promotional offer for the customer optionally includes identifying the factors as one or more of the following: customer type, the customer identifier, products purchased by the customer, loyalty points balance, time of day, calendar date, and day of week.

The step of evaluating factors in combination with the range of redemption to supply the promotional offer for the customer optionally includes sending the factors, the current physical location of the customer, and the range of redemption to a list of participating enterprises and receiving back from the enterprise the promotional offer.

The step of evaluating factors in combination with the range of redemption to supply the promotional offer for the customer optionally includes receiving some of the factors from the customer via a location-based promotion evaluation agent executing on a mobile device of the customer.

According to a second aspect of the present invention there is provided a system, comprising: a first machine having a location-based promotion evaluation manager implemented in a non-transitory computer-readable storage medium and which processes on the first machine; and a second machine having a location-based promotion evaluation agent implemented in a non-transitory computer-readable storage medium and which processes on the second machine; the location-based promotion evaluation manager configured to identify and dynamically transmit a promotional offer from an enterprise to the location-based promotion evaluation agent based on a geographical range of the enterprise that includes a current location of a customer for the second machine, the location-based promotion evaluation agent configured to provide information to the location-based promotion evaluation manager for identifying the customer and the current location and the location-based promotion evaluation agent also configured to present the promotional offer to the customer on a display of the second machine.

The first machine may be a mobile phone of a user and the second machine may be located in a cloud processing environment.

According to a third aspect of the present invention there is provided a processor-implemented method programmed in a non-transitory processor-readable medium and to execute on one or more processors configured to execute the method, comprising: sending an identifier and a current physical location to a location-based promotion evaluation manager; and receiving a promotional offer within a predefined range of redemption of an enterprise offering the promotional offer, wherein the current physical location is within the predefined range of redemption.

The step of sending an identifier and a current physical location to a location-based promotion evaluation manager optionally further includes providing the identifier that is linked to a specific customer identifier for a customer by the location-based promotion evaluation manager.

Optionally, sending further includes providing the identifier and as an identifier for the method processing that is linked to a specific customer identifier for a customer by the location-based promotion evaluation manager.

The step of sending an identifier and a current physical location to a location-based promotion evaluation manager optionally further includes providing the identifier as a customer identifier that identifies a customer for the location-based promotion evaluation manager.

The step of sending an identifier and a current physical location to a location-based promotion evaluation manager optionally further includes providing factors to the location-based promotion evaluation manager for consideration by the location-based promotion evaluation manager in providing back the promotional offer.

The method optionally further comprises, sending a notice to the location-based promotion evaluation manager that the promotional offer was redeemed by the customer at the enterprise.

These and other aspects of the present invention will now be described, by way of example only, with reference to the accompanying drawings, in which:

FIG. 1 is a diagram of method for location-based promotion evaluation, according to an example embodiment;

FIG. 2 is a diagram of another method for location-based promotion evaluation, according to an example embodiment;

FIG. 3 is a diagram of location-based evaluation system, according to an example embodiment;

The aforementioned industry problems are resolved by providing a more complex location-based promotion evaluation service. The location-based promotion evaluation service can execute in a cloud processing environment or on a remote network service and it interacts with a user's mobile device to provide more desirable and specific promotions for enterprises to the consumer on a timelier basis.

While automated promotion evaluations have existed for some time by combining factors such as customer identifier (ID), items purchased, identifier used, time of day, day of week, loyalty points balance; the additional use of location-based information in conjunction with any combination of any or all of the following allows for an additional criteria for offer evaluation, which has not been done and which is superior to past promotion evaluation techniques. These additional criteria include, such things as:

1) Customer ID;

2) Customer Identification type;

3) Products Purchased;

4) Points balance;

5) Time of day; and/or

6) Day of week.

As is demonstrated herein and below, location-based information is leveraged as an additional component in the above offer criteria that are dynamically evaluated. Inclusion of a location-based condition allows the following configuration to be entered as an offer condition in the promotional evaluation process:

Center of opportunity (COO) defined by longitude and latitude; and

Area of redemption defined as distance surrounding Center of opportunity.

Current solutions utilize location based on a retail location identifier (Store 25), which indicates the retail outlet or store that a customer is currently shopping in. The new techniques presented herein allow for freedom of movement of the customer outside of a retail location and participation based on predefined geographic region. This allow for offers such as the following: use your mobile device to purchase a Jazz CD within 500 feet (152.4 metres) of the annual Jazz festival on Friday night the 22nd of July between 8 p.m. and midnight and receive an extra 1000 reward points. The addition of the location based range allows for greater opportunity to offer customers incentives based on where they are located based on geographic location not just which physical retail outlet they are participating in.

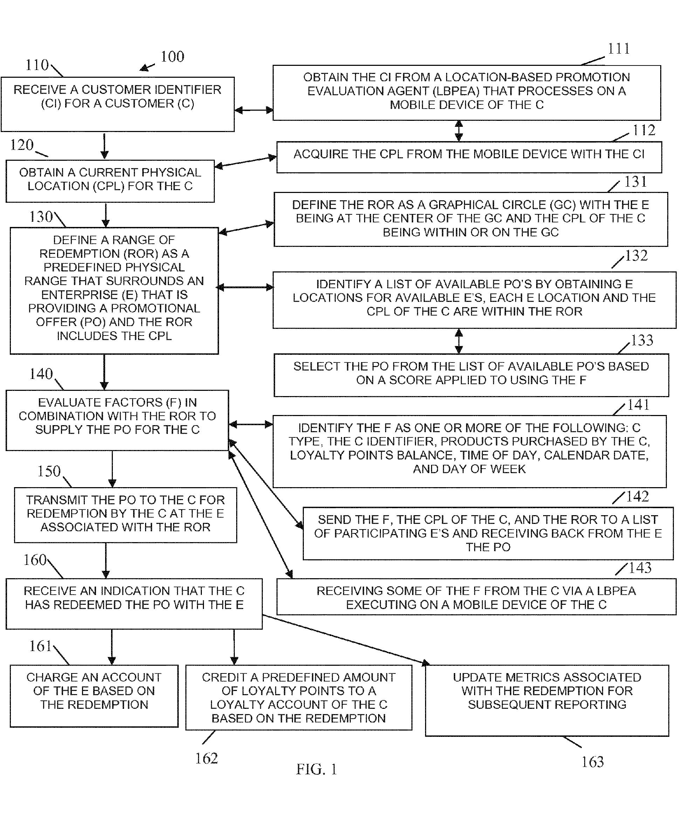

It is within this initial context that various embodiments of the invention are discussed with respect to the FIGS. 1-3.

FIG. 1 is a diagram of method 100 for location-based promotion evaluation, according to an example embodiment. The method 100 (hereinafter "location-based evaluation manager") is implemented as instructions and programmed within a non-transitory computer-readable (processor-readable) storage medium that executes on one or more processors of a server (such as a cloud processing environment), the processors of the server are specifically configured to execute the location-based evaluation manager. The location-based evaluation manager is operational over a network; the network is wireless or a combination of wired and wireless. In an embodiment, the network is the Internet, a Wi-Fi network, a cellular network, a satellite network, or the network is a combination or all of these networks.

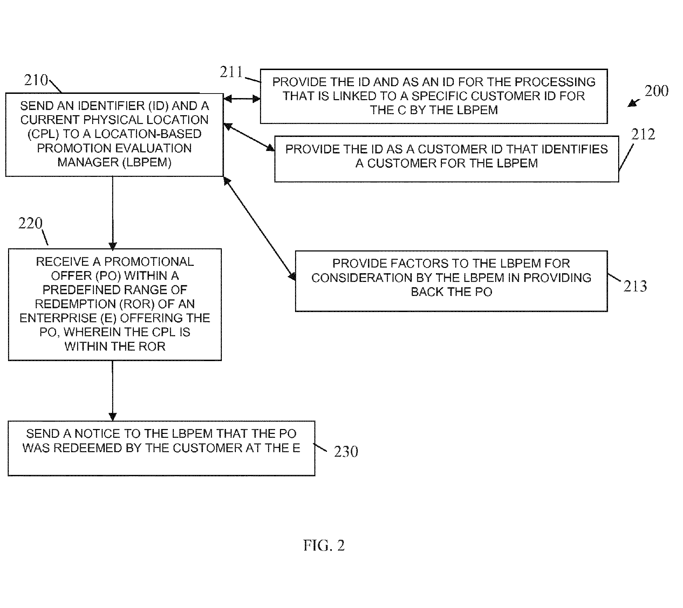

The processing of the location-based evaluation manager is presented from the perspective of a process that executes on the network via a server machine and communicates with location-based evaluation agents that process on mobile devices of consumers. A description of the processing associated with the location-based evaluation agent is presented below with respect to the discussion of the FIG. 2.

At 110, the location-based evaluation manager receives a customer identifier for a customer. This can occur in a variety of manners.

For example, at 111, the location-based evaluation manager obtains the customer identifier from a location-based promotion evaluation agent that processes on a mobile device of the customer (e.g., mobile phone, laptop, tablet, and the like).

Continuing with the embodiment of 111 and at 112, the location-based evaluation manager acquires the current physical location from the mobile device with the customer identifier.

It may also be the case that the customer identifier is resolved by the location-based evaluation manager based on a supplied identifier for the location-based promotion evaluation agent that executes as an application on the mobile device of the customer.

At 120, the location-based evaluation manager obtains or already has (as discussed above with respect to the embodiment of 112) a current physical location of the customer. That is, the current physical location of the customer's mobile device is obtained as longitude and latitude coordinates that map to cartographic data (map data).

At 130, the location-based evaluation manager defines a range of redemption as a predefined physical range that surrounds an enterprise and its location. The enterprise providing a promotional offer (discussed below at 140-150). The range of redemption includes the current physical location of the customer. So, the customer is provided freedom of movement within the range of redemption to be considered for promotional offers. This heretofore has not been capable of being provided to the customer from the industry.

According to an embodiment, at 131, the location-based evaluation manager defines the range of redemption as a graphical circle with the enterprise's location being at the center of the circle and the current physical location of the customer being within the graphical circle or on the perimeter of the graphical circle.

In another case, at 132, the location-based evaluation manager identifies a list of available promotional offers by obtaining locations for available enterprises. Each specific enterprise location and the current physical location of the customer are within the range of redemption. However, it is noted that new ranges of redemption are calculated for each enterprise location and the current physical location for the customer must be within the predefined physical range from any said new range of redemption.

Continuing with the embodiment of 132 and at 133, the location-based evaluation manager selects the promotional offer from the list of available promotional offers based on a calculated score applied to using factors (discussed below with reference to the processing at 140). It is also noted that multiple promotional offers can be sent to the customer; the discussion of a single promotional offer is done for purposes of illustration and ease of comprehension. Moreover, multiple promotional offers available can be ranked based on preferences or a profile registered to the customer.

At 140, the location-based evaluation manager evaluates factors in combination with the range of redemption to supply the promotional offer for the customer. This can entail a variety of processing as well.

For example, at 141, the location-based evaluation manager may identify the factors as one or more of: a customer type (loyalty level, retail versus consumer-based, and the like), the customer identifier, products purchased by the customer in the past, a loyalty points balance held on a loyalty account of the customer, time of day, calendar date, and/or day of the week.

In another situation, at 142, the location-based evaluation manager sends the factors, the current physical location, and the range of redemption to a list of participating enterprise systems. The evaluation is essentially outsourced to each of the enterprises or to a third-party not associated with the enterprises directly. As a result of outsourcing the evaluation, the location-based evaluation manager receives back the promotional offer.

In one scenario, at 143, the location-based evaluation manager receives some of the factors from the customer via a location-based evaluation agent (discussed below with respect to the FIG. 2). So, the customer or the location-based evaluation agent can actually put restrictions on the promotional offer provided by supplying their own customized factors for evaluation.

At 150, the location-based evaluation manager transmits the promotional offer to the customer for redemption by the customer at the enterprise associated with the range or redemption and the promotional offer.

According to an embodiment, at 160, the location-based evaluation manager receives an indication that the customer has redeemed the promotional offer with the enterprise. This can come from the location-based evaluation agent of the customer or can come from an enterprise system associated with the enterprise where the promotional offer was redeemed.

Continuing with the embodiment of 160 and at 161, the location-based evaluation manager charges an account of the enterprise based on the redemption. That is, the location-based evaluation manager can be a third-party pay service to enterprises that is paid a transaction fee based on redeemed promotional offers.

In another case of 160 and at 162, the location-based evaluation manager credits a predefined amount of loyalty points to a loyalty account of the customer based on the redemption. Here, the customer may in addition to the promotional offer receive added or bonus loyalty points that get automatically credited to a loyalty account of the customer when the promotional offer is redeemed by the customer.

In yet another situation of 160 and at 163, the location-based evaluation manager updates metrics associated with the redemption for subsequent reporting. This may be useful to each of the enterprises or to the organization providing the location-based evaluation manager. This may also be used for payment or licensing conditions.

FIG. 2 is a diagram of another method 200 for location-based promotion evaluation, according to an example embodiment. The method 200 (hereinafter "location-based evaluation agent") is implemented as instructions and programmed within a non-transitory computer-readable (processor-readable) storage medium that executes on one or more processors of a consumer's mobile device (such as a mobile phone, a laptop, a tablet, and the like), the processors of the mobile device are specifically configured to execute the location-based evaluation agent. The location-based evaluation agent is operational over a network; the network is wireless or a combination of wired and wireless. In an embodiment, the network is the Internet, a Wi-Fi network, a cellular network, a satellite network, or the network is a combination or all of these networks.

In an embodiment, the location-based evaluation agent describes processing actions from the perspective of a specific mobile device of a consumer that interacts with the location-based evaluation manager of the
FIG. 1 for purposes of obtaining and communicating location-based promotions from retailers to the consumer.

At 210, the location-based evaluation agent sends an identifier and a current physical location to a location-based promotion evaluation manager (such as the location-based evaluation manager of the FIG. 1).

According to an embodiment, at 211, the location-based evaluation agent provides the identifier as an identifier for the location-based evaluation agent. This provided identifier is linked by the location-based evaluation manager to a specific customer identifier for a customer. In other words, each instance of the location-based evaluation agent provides its own unique identifier for a specific customer that has downloaded and installed the location-based evaluation agent on his/her mobile device (phone, laptop, tablet, and the like).

In an embodiment, at 212, the location-based evaluation agent provides the identifier as a customer identifier that identifies the customer uniquely for the location-based evaluation manager. In this embodiment, the location-based evaluation manager does not have to do any additional processing to recognize or map the identifier to a specific customer.

In another situation, at 213, the location-based evaluation agent provides factors to the location-based evaluation manager for consideration by the location-based evaluation manager when providing back to the location-based evaluation agent a promotional offer.

At 220, the location-based evaluation agent receives a promotional offer within a predefined range of redemption of an enterprise offering the promotional offer. The current physical location is within the range of redemption and the enterprise location is at the center of the range of redemption when the range of redemption is a geographical circle. In such a case, the predefined range of redemption may be represented as a radius or diameter that the location-based evaluation manager uses to represent and draw the geographical circle and the current physical location exists within the circle or on the perimeter of the circle.

In an embodiment, at 230, the location-based evaluation agent sends a notice to the location-based evaluation manager that the promotional offer was redeemed by the customer at the enterprise. As discussed above with reference to embodiments of the FIG. 1, it may also be the case that the notice is sent by an enterprise system of the enterprise where the customer redeems the promotional offer.

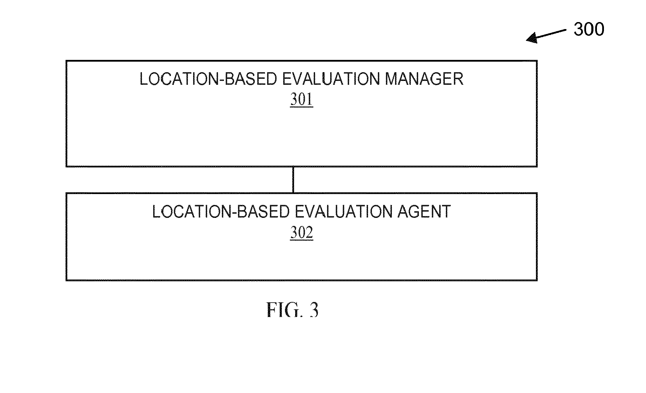

FIG. 3 is a diagram of location-based evaluation system 300, according to an example embodiment. The location-based evaluation system 300 includes one or more processors that are specifically configured to perform, inter alia, the processing associated with the methods 100 and 200 of the FIGS. 1 and 2, respectively. Furthermore, the location-based evaluation system 300 is operational over a network and the network can be wireless or a combination of wired and wireless. In an embodiment, the network is the Internet. In another case, the network is a cellular network. It yet another situation, the network is a satellite network. In still another case, the network is a Wi-Fi network. It may also be that the network uses all or a combination of: the Internet, cellular network, Wi-Fi network, and/or satellite network.

The location-based evaluation system 300 includes a location-based evaluation manager 301 and a location-based evaluation agent 302. Each of these and their interactions with one another will now be discussed in turn.

The location-based evaluation manager 301 processes on a physical machine or a Virtual Machine (VM) (first machine, network server device) and is operational over a network. That is, the location-based evaluation manager 301 is implemented, resides, and programmed within a non-transitory processor-readable medium as executable instructions that a processor-enabled device executes. In some cases, the location-based evaluation manager 301 is accessible via one or more cloud processing environments. Example processing associated with the location-based evaluation manager 301 was presented above with reference to the FIG. 1.

The location-based evaluation manager 301 is configured to identify and dynamically transmit a promotional offer from an enterprise to the location-based evaluation agent 302 based on a geographical range of distance of the enterprise from a current location of a customer having the second machine (an instance of the location-based evaluation agent 302 processing on the second machine).

The location-based evaluation agent 302 is implemented, programmed, and resides within a non-transitory processor-readable storage medium and executes on a mobile device (second machine, mobile phone, laptop, tablet, and the like) of a consumer. Example processing associated with the location-based evaluation agent 302 was presented above in detail with respect to the FIG. 2.

The location-based evaluation agent 302 is configured to provide information to the location-based evaluation manager 301 for identifying the current location. Moreover, the location-based evaluation agent 302 is configured to present the promotional offer to the customer on a display of the second machine. In some cases, the promotional offer displayed is a barcode that is scanned from the display of the second machine to be automatically redeemed at the enterprise. In other cases, Near Field Communication (NFC), Bluetooth, Wi-Fi, and other automated techniques may be used to communicate the promotional offer from the second machine to a device of the enterprise for redemption. It may also be that an agent of the enterprise manually views the displayed promotional offer to redeem it on behalf of the customer.

It is also noted that the actual promotional offer does not always have to be sent from the location-based evaluation manager 301 directly to the location-based evaluation agent 302. That is, in some cases, an enterprise system of an enterprise may directly send the promotional offer to the location-based evaluation agent 302 after consulting with the location-based evaluation manager 301.

According to an embodiment, the first machine is in a cloud processing environment over the network and the second machine is a mobile phone of a user/customer/consumer.

The above description is illustrative, and not restrictive. Many other embodiments will be apparent to those of skill in the art upon reviewing the above description. Various modifications may be made to the above described embodiments within the scope of the following claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A processor-implemented method programmed in a non-transitory processor-readable medium and to execute on a device configured to execute the method, comprising:
receiving a customer identifier for a customer (step 110);
obtaining a current physical location for the customer (step 120);
defining a range of redemption as a predefined physical range that surrounds an enterprise that is providing a promotional offer and the range or redemption includes the current physical location (step 130);
evaluating factors in combination with the range of redemption to supply the promotional offer for the customer (step 140); and
transmitting the promotional offer to the customer for redemption by the customer at the enterprise associated with the range of redemption (step 150).

2. The method of claim 1 further comprising, receiving an indication that the customer has redeemed the promotional offer with the enterprise (step 160).

3. The method of claim 1 or 2 further comprising, charging an account of the enterprise based on the redemption (step 161).

4. The method of claim 2 or 3 further comprising, crediting a predefined amount of loyalty points to a loyalty account of the customer based on the redemption (step 162).

5. The method of claim 2, 3, or 4 further comprising, updating metrics associated with the redemption for subsequent reporting (step 163).

6. The method of any preceding claim, wherein receiving further includes obtaining the customer identifier from a location-based promotion evaluation agent (302) that processes on a mobile device of the customer (step 111).

7. The method of claim 6, wherein obtaining further includes acquiring the current physical location from the mobile device with the customer identifier (step 112).

8. The method of any preceding claim, wherein defining the range of redemption as a predefined physical range includes defining a graphical circle with the enterprise being at the center of the graphical circle and the current physical location of the customer being within or on the graphical circle (step 131).

9. The method of any preceding claim, wherein defining further includes identifying a list of available promotional offers by obtaining enterprise locations for available enterprises, each enterprise location and the current physical location of the customer are within the range of redemption (step 132).

10. The method of claim 9, wherein evaluating further includes selecting the promotional offer from the list of available promotional offers based on a score applied to using the factors (step 133).

11. The method of any preceding claim, wherein evaluating further includes identifying the factors as one or more of the following: customer type, the customer identifier, products purchased by the customer, loyalty points balance, time of day, calendar date, and day of week (step 141).

12. The method of any preceding claim, wherein evaluating further includes sending the factors, the current physical location of the customer, and the range of redemption to a list of participating enterprises and receiving back from the enterprise the promotional offer (step 142).

13. The method of any preceding claim, wherein evaluating further includes receiving some of the factors from the customer via a location-based promotion evaluation agent executing on a mobile device of the customer (step 143).

14. A system (300) comprising:
a first machine having a location-based promotion evaluation manager (301) implemented in a non-transitory computer-readable storage medium and which processes on the first machine; and
a second machine having a location-based promotion evaluation agent (302) implemented in a non-transitory computer-readable storage medium and which processes on the second machine;
the location-based promotion evaluation manager (301) being configured to identify and dynamically transmit a promotional offer from an enterprise to the location-based promotion evaluation agent (302) based on a geographical range of the enterprise that includes a current location of a customer for the second machine, the location-based promotion evaluation agent (302) being configured to provide information to the location-based promotion evaluation manager (301) for identifying the customer and the current location, and the location-based promotion evaluation agent (302) also being configured to present the promotional offer to the customer on a display of the second machine.

15. The system of claim 14, wherein the first machine is a mobile phone of a user and the second machine is located in a cloud processing environment.

## Amended claims

### Amended claims in accordance with Rule 137(2) EPC.

**1.** A processor-implemented method programmed in a non-transitory processor-readable medium and to execute on a device configured to execute the method, comprising:
receiving a customer identifier for a customer (step 110);
obtaining a current physical location for the customer (step 120);
defining a range of redemption as a predefined physical range that surrounds an enterprise that is providing a promotional offer and the range or redemption includes the current physical location (step 130);
evaluating factors in combination with the range of redemption to supply the promotional offer for the customer (step 140);
transmitting the promotional offer to the customer for redemption by the customer at the enterprise associated with the range of redemption (step 150); and
receiving an indication that the customer has redeemed the promotional offer with the enterprise (step 160).

**2.** The method of claim 1 further comprising, charging an account of the enterprise based on the redemption (step 161).

**3.** The method of claim 2 further comprising, crediting a predefined amount of loyalty points to a loyalty account of the customer based on the redemption (step 162).

**4.** The method of claim 2 or 3 further comprising, updating metrics associated with the redemption for subsequent reporting (step 163).

**5.** The method of any preceding claim, wherein receiving further includes obtaining the customer identifier from a location-based promotion evaluation agent (302) that processes on a mobile device of the customer (step 111).

**6.** The method of claim 5, wherein obtaining further includes acquiring the current physical location from the mobile device with the customer identifier (step 112).

**7.** The method of any preceding claim, wherein defining the range of redemption as a predefined physical range includes defining a graphical circle with the enterprise being at the center of the graphical circle and the current physical location of the customer being within or on the graphical circle (step 131).

**8.** The method of any preceding claim, wherein defining further includes identifying a list of available promotional offers by obtaining enterprise locations for available enterprises, each enterprise location and the current physical location of the customer are within the range of redemption (step 132).

**9.** The method of claim 8, wherein evaluating further includes selecting the promotional offer from the list of available promotional offers based on a score applied to using the factors (step 133).

**10.** The method of any preceding claim, wherein evaluating further includes identifying the factors as one or more of the following: customer type, the customer identifier, products purchased by the customer, loyalty points balance, time of day, calendar date, and day of week (step 141).

**11.** The method of any preceding claim, wherein evaluating further includes sending the factors, the current physical location of the customer, and the range of redemption to a list of participating enterprises and receiving back from the enterprise the promotional offer (step 142).

**12.** The method of any preceding claim, wherein evaluating further includes receiving some of the factors from the customer via a location-based promotion evaluation agent executing on a mobile device of the customer (step 143).

**13.** A system (300) comprising:
a first machine having a location-based promotion evaluation manager (301) implemented in a non-transitory computer-readable storage medium and which processes on the first machine; and
a second machine having a location-based promotion evaluation agent (302) implemented in a non-transitory computer-readable storage medium and which processes on the second machine;
the location-based promotion evaluation manager (301) being configured to identify and dynamically transmit a promotional offer from an enterprise to the location-based promotion evaluation agent (302) based on a geographical range of the enterprise that includes a current location of a customer for the second machine, the location-based promotion evaluation agent (302) being configured to provide information to the location-based promotion evaluation manager (301) for identifying the customer and the current location, and the location-based promotion evaluation agent (302) also being configured to present the promotional offer to the customer on a display of the second machine, the location-based promotion evaluation manager (301) also being configured to receive an indication that the customer has redeemed the promotional offer with the enterprise.

**14.** The system of claim 13, wherein the first machine is a mobile phone of a user and the second machine is located in a cloud processing environment.
